# EUROPÄISCHE PATENTSCHRIFT

(11) **EP 0 876 103 B1**
(45) Veröffentlichungstag und Bekanntmachung des Hinweises auf die Patenterteilung: **06.02.2002**
(21) Anmeldenummer: 97952765.2
(22) Anmeldetag: 14.11.1997
(51) Int. Cl.: A21B 3/07, A21C 13/02

(54) **ANLAGE ZUM LAGERN VON TEIGLINGEN**
INSTALLATION FOR STORING DOUGH PRODUCTS
INSTALLATION D'ENTREPOSAGE DE PRODUITS EN PATE

(30) Priorität: 14.11.1996 DE 19647119
(43) Veröffentlichungstag der Anmeldung: 11.11.1998
(73) Patentinhaber: Bäckerei Brinker GmbH, 44628 Herne (DE)
(72) Erfinder: DITTRICH, Bernd, D-45772 Marl (DE)
(74) Vertreter: COHAUSZ HANNIG DAWIDOWICZ & PARTNER
(86) Internationale Anmeldenummer: EP9706359
(87) Internationale Veröffentlichungsnummer: WO9820739

(56) Entgegenhaltungen:
- WO-A-93/22927
- FR-A- 2 194 109
- GB-A- 985 054

## Beschreibung

Die Erfindung betrifft eine Anlage in einem Gärraum zum zeitlich begrenzten Lagern von Teiglingen in mehreren übereinanderliegenden Ebenen, nach dem Oberbegriff von Anspruch 1.

Aus der FR 2 194 109 ist eine solche Anlage bekannt. Hierbei ist es nicht möglich, in den verschiedenen Ebenen unterschiedliche Verweilzeiten bzw. Garzeiten zu erreichen.

Es ist bekannt, Teiglinge zum Beispiel von Broten oder Brötchen auf verfahrbaren mehretagigen Gestellen in einem Gärraum zu lagern, wobei die Teiglinge auf Paletten in einzelnen Etagen liegen. Ferner ist es bekannt, Teiglinge auf Förderbändern durch einen Gärraum zu bewegen. Der erste Fall erfordert einen hohen Arbeitsaufwand und der zweite einen hohen technischen Aufwand bei erheblichem Platzbedarf.

Ferner ist es aus der GB 985 054 bekannt, eine größere Anzahl von Wagen zickzackförmig durch eine Anlage zu fahren, so dass jeder Wagen durch alle Ebenen fährt und damit extrem lange in der Anlage bleibt um lange Garzeiten zu erzielen.

Aufgabe der Erfindung ist es, eine Anlage für einen Gärraum der eingangs genannten Art zu schaffen, deren technischer Aufwand, Bedienungsaufwand und Platzbedarf bei hoher Funktionssicherheit gering ist.

Diese Aufgabe wird erfindungsgemäß dadurch gelöst, daß die Teiglinge auf tablettförmigen flachen, insbesondere rechteckförmigen Paletten liegen, und daß in jeder Ebene die Paletten eng nebeneinanderliegen, so daß ein Verschieben einer im ersten, der Beschickungsseite nächsten Schrankabschnitt liegenden Palette zu einem Verschieben aller übrigen, nur in derselben Schrankebene liegenden Paletten führt.

Bei einer solchen Anlage verschiebt die Ladevorrichtung beim Einschieben einer Palette in einer Ebene alle übrigen Paletten und damit sorgt die Ladevorrichtung der Beschickungsseite für das Entladen an der Entnahmeseite. Hierzu ist weder ein personeller Aufwand noch das Anordnen von Förderbändern erforderlich.

Besonders vorteilhaft ist es, wenn in einem Schrankabschnitt mehrere Paletten senkrecht übereinander gestapelt sind, wobei jede Palette verschiebbar geführt ist. Hierbei sollten mehrere Schrankabschnitte eng nebeneinander derart angeordnet sind, daß die Führungen gleicher Ebene miteinander fluchten.

Von besonderem Vorteil ist es, wenn an der Beschickungsseite und an der Entnahmeseite des Schrankes jeweils ein Hebewerk als Lade- bzw. Entladevorrichtung angeordnet ist, durch das die Paletten senkrecht anhebbar bzw. abhebbar und in die Ebenen schiebbar bzw. aus den Ebenen aufnehmbar sind. Hierdurch können die Paletten ohne Anordnung eines zusätzlichen Förderbandes von der Entnahmeseite zur Beschickungsseite zurückgeführt werden, da die Entladevorrichtung in der Rückführebene eine leere Palette in die Rückführebene nur hineindrücken muß, um damit alle übrigen leeren Paletten der Rückführebene zu verschieben und damit auf der Beschickungsseite eine leere Palette heraustreten zu lassen.

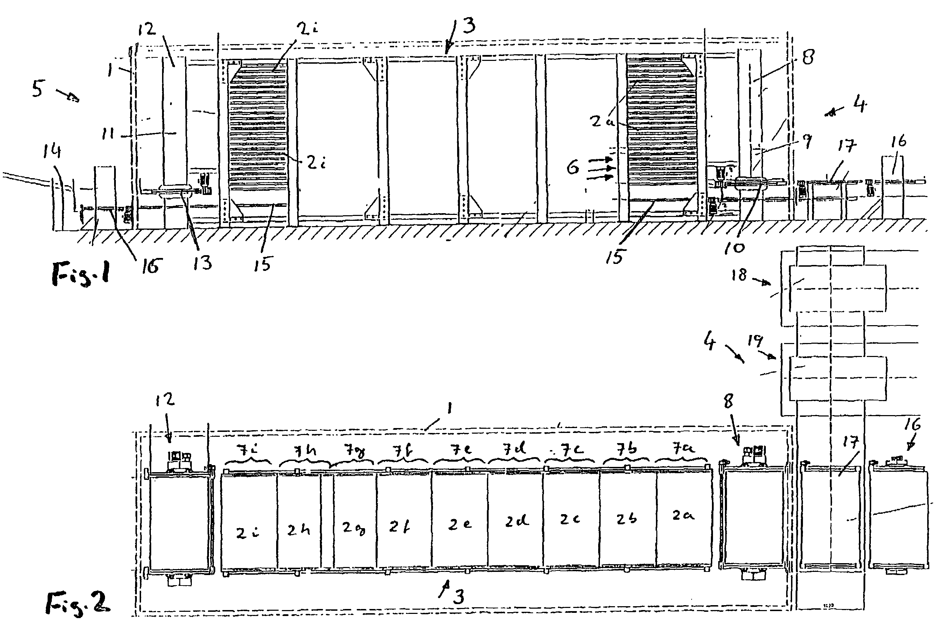

Ein Ausführungsbeispiel der Erfindung ist in der Zeichnung dargestellt und wird im folgenden näher beschrieben. Es zeigen
- Fig. 1: eine Seitenansicht der Anlage in einem Gärraum und
- Fig. 2: eine Ansicht der Anlage von oben.

In einem Gärraum 1 befindet sich eine Anlage zum zeitlich begrenzten Lagern von Teiglingen, die auf flachen Paletten 2 liegen, die tablettförmig und insbesondere rechteckig sind. Die Anlage weist einen Schrank 3 auf, dem auf der Beschickungsseite 4 die Paletten 2 zugeführt werden. Auf der Entnahmeseite 5 verlassen die Paletten den Schrank, nachdem die Teiglinge ausreichend gegärt d.h. aufgegangen sind.

Der Schrank 3 bildet mehrere übereinanderliegende waagerechte Ebenen 6, die jeweils zu beiden Seiten, insbesondere U-förmige waagerechte Führungsschienen besitzen, zwischen den die Paletten 2 geführt sind. In jeder Ebene 6 befinden sich im Ausführungsbeispiel 9 nebeneinanderliegende Paletten 2, die eng aneinanderliegen und aneinanderstoßen. In Fig. 2 sind die neun in einer Ebene liegendene Paletten mit 2a bis 2i bezeichnet. Wird die der Beschickungsseite 4 nächstliegendste Palette 2a in Richtung der Entnahmeseite gedrückt, so drückt diese Palette alle übrigen in derselben Ebene 6 liegenden Paletten um eine Palettenbreite weiter, so daß die der Entnahmeseite 5 nächstliegendste Palette 2i aus dem Schrank 3 bzw. der jeweiligen betreffenen Schrankebene herausgedrückt wird, um auf der Entnahmeseite entgegengenommen zu werden.

Da der Schrank 3 eine hohe Zahl von Ebenen 6 übereinander bildet, liegen in jedem Schrankabschnitt 7 mehrere Paletten übereinander, wobei stets der der Beschickungsseite 4 nächstliegendste Schrankabschnitt 7a zuerst beladen wird. Hierzu ist an der Beschickungsseite 4 eine Ladevorrichtung 8 angeordnet, die ein Hebewerk 9 aufweist, mit einer senkrecht verfahrbaren Ladeeinrichtung 10, der jeweils eine Palette zugeführt wird und die diese Palette in die jeweils gewählte Ebene 6 drückt, um damit im ersten Schrankabschnitt 7a die dort befindliche Palette vom Schrankabschnitt 7a zum Schrankabschnitt 7b zu drücken. Hierbei werden auch alle in derselben Ebene 6 befindlichen Paletten um eine Palettenbreite weitergedrückt.

Auf der Entnahmeseite 5 befindet sich in gleicher Weise ein Hebewerk 11 einer Entladevorrichtung 12. Die senkrecht verfahrbare Entladeeinrichtung 13 wird synchron zur Ladeeinrichtung 10 verfahren, so daß die Entladeeinrichtung 13 stets in derselben Ebene 6 steht, in die sich die Ladeeinrichtung 10 bewegt hat. Sobald also die Ladeeinrichtung 10 eine Palette in die jeweils gewählte Ebene 6 drückt, wird die aus dem letzten Schrankabschnitt 7i herausgedrückt Palette von der Entladeeinrichtung 13 aufgenommen und zu einer Einrichtung (Grabbler 14) geführt, die die Teiglinge entnimmt.

Die leeren Paletten 2 werden von der Entnahmeseite 5 zur Beschickungsseite 4 über eine Rückführebene 15 zurückgeführt, die unterhalb aller Ebenen 6 im Schrank 3 liegt. Auch hier werden die Paletten 2 taktweise durchgeschoben, so daß eine Palette die andere in der Rückführebene 15 zur Beschickungsseite 4 hin verschiebt, so daß jeweils eine leere Palette aus dem Schrankabschnitt 7a austritt, um dort aufgenommen und durch eine Rückführvorrichtung 16 zum Beladen mit Teiglingen gebracht wird.

Entnahmeseite 5 und Beschickungsseite 4 weisen somit jeweils eine Rückvorrichtung 16 auf und ferner befindet sich an der Beschickungsseite zwischen Rückvorrichtung 16 und Ladevorrichtung 8 eine Ablagestelle 17 für die Paletten 2. Ferner sind in Fig. 2 neben der Ladevorrichtung 8 zwei Anlagen 18, 19 dargestelt, von denen die gefüllten Paletten zur Beschickungsseite 4 gelangen.

## Patentansprüche

1. Anlage in einem Gärraum (1) zum zeitlich begrenzten Lagern von Teiglingen in mehreren übereinanderliegenden Ebenen (6), in der die Teiglinge auf tablettförmigen flachen, insbesondere rechteckförmigen Paletten (2) liegen, und wobei in jeder Ebene (6) die Paletten (2) eng nebeneinander in Schrankabschnitte (7a-7i) liegen, **dadurch gekennzeichnet daß** ein Verschieben mittels einer Ladeeinrichtung (10) einer im ersten, der Beschickungsseite nächsten Schrankabschnitt (7a) liegenden Palette (2) zu einem Verschieben aller übrigen, nur in derselben Schrankebene (6) liegenden Paletten (2) führt.

2. Anlage nach Anspruch 1, **dadurch gekennzeichnet, daß** in einem Schrankabschnitt (7a-7i) mehrere Paletten (2) senkrecht übereinander gestapelt sind, wobei jede Palette verschiebbar geführt ist.

3. Anlage nach Anspruch 1, **dadurch gekennzeichnet, daß** mehrere Schrankabschnitte (7a-7i) eng nebeneinander derart angeordnet sind, daß die Führungen gleicher Ebene (6) miteinander fluchten.

4. Anlage nach einem der vorhergehenden Ansprüche, **dadurch gekennzeichnet, daß** an der Beschickungsseite (4) und an der Entnahmeseite (5) des Schrankes (3) jeweils ein Hebewerk (9, 11) als Lade- bzw. Entladevorrichtung angeordnet ist, durch das die Paletten (2) senkrecht anhebbar bzw. abhebbar und in die Ebenen (6) schiebbar bzw. aus den Ebenen aufnehmbar sind.

5. Anlage nach Anspruch 4, **dadurch gekennzeichnet, daß** die zwei Hebewerke (9,11) synchron steuerbar sind.

6. Anlage nach einem der vorhergehenden Ansprüche, **dadurch gekennzeichnet, daß** unterhalb oder im unteren Bereich des Schrankes (9) in einer Rückführebene (15) die leeren Paletten (2) von der Entnahmeseite (5) zur Beschickungsseite (4) rückführbar sind.

## Claims

1. An installation in a baking chamber (1) for storing dough products in a number of superimposed planes (6) for a limited period of time, wherein the dough products lie on flat, tray-shaped pallets (2), the pallets in each plane (6) being arranged close to one another in cabinet sections (7a-7i), **characterised in that** a displacement by means of a loading device (10) of a pallet (2) located in the first cabinet section (7a) on the charging side results in a displacement of all the remaining pallets (2) located only in the same plane (6) of the cabinet.

2. An installation according to claim 1, **characterised in that** several pallets (2) are stacked vertically one above the other in a cabinet section (7a-7i), each pallet being displaceably guided.

3. An installation according to claim 1, **characterised in that** several cabinet portions (7a-7i) are so arranged close to one another that the guides of the same plane (6) are in alignment with one another.

4. An installation according to one of the preceding claims, **characterised in that** disposed on the charging side (4) and the removal side (5) of the cabinet (3) respectively is a lifting mechanism (9, 11) taking the form of a loading/ unloading device by means of which the pallets can be vertically raised/lowered and moved into the planes (6) or received from the planes.

5. An installation according to claim 4, **characterised in that** the two lifting mechanisms (9, 11) can be controlled synchronously.

6. An installation according to one of the preceding claims, **characterised in that** the empty pallets (2) can be returned in a return plane (15) from the removal side (5) to the charging side (4) below or in the lower zone of the cabinet (9).

## Revendications

1. Installation dans un volume de fermentation (1) pour l'entreposage limité dans le temps de pâtons dans plusieurs plans (6) superposés dans lesquels les pâtons reposent sur des palettes (2) planes en forme de tablettes, en particulier rectangulaires, les palettes (2) se trouvant, dans chaque plan (6), étroitement côte à côte dans des sections d'armoire (7a - 7i),
**caractérisée en ce qu'**une translation, au moyen d'un dispositif de chargement (10), d'une palette (2) se trouvant dans la première section d'armoire (7a) adjacente au côté de chargement conduit à la translation de toutes les palettes (2) restantes se trouvant seulement dans le même plan (6) d'armoire.

2. Installation selon la revendication 1,
**caractérisée en ce que** plusieurs palettes (2) sont empilées verticalement les unes sur les autres dans une section d'armoire (7a - 7i), chaque palette étant guidée à coulissement.

3. Installation selon la revendication 1,
**caractérisée en ce que** plusieurs sections d'armoire (7a - 7i) sont disposées étroitement côte à côte de telle manière que les guidages d'un même plan (6) sont alignés les uns avec les autres.

4. Installation selon l'une des revendications précédentes,
**caractérisée en ce que**, du côté de chargement (4) et du côté d'extraction (5) de l'armoire (3) est disposé respectivement un élévateur (9, 11) en tant que dispositif de chargement ou respectivement de déchargement, par lequel les palettes (2) peuvent être soulevées ou respectivement abaissées verticalement et déplacées à coulissement dans les plans (6) ou respectivement recueillies hors des plans.

5. Installation selon la revendication 4,
**caractérisée en ce que** les deux élévateurs (9, 11) peuvent être commandés de manière synchrome.

6. Installation selon l'une des revendications précédentes,
**caractérisée en ce que** les palettes (2) vides peuvent être ramenées du côté d'extraction (5) au côté de chargement (4) dans un plan de retour (15) au-dessous ou dans la zone inférieure de l'armoire (3).
